# EUROPEAN PATENT APPLICATION

(11) **EP 2 663 142 A1**
(43) Date of publication of application: **13.11.2013**
(21) Application number: 12167046.7
(22) Date of filing: 08.05.2012
(51) Int. Cl.: H04W 64/00, H04W 88/04

(54) **TRACKING SYSTEM AND METHOD FOR IMPROVING POSITIONING OF A PORTABLE POSITIONING UNIT IN A MINE**

(71) Applicant: ABB Research Ltd., 8050 Zürich (CH)
(72) Inventor: Landernäs, Krister, 734 31 Hallstahammar (SE); Neander, Jonas, 722 23 Västerås (SE); Sjöström, Stefan, 905 91 Umeå (SE)
(74) Representative: Savela, Reino Aleksi

(57) **Abstract**

It is presented a tracking system for determining a position of a portable positioning unit in a mine. The tracking system comprises: an anchor node comprising a receiver for receiving a signal from the portable positioning unit; a mobile object which, when present in a tunnel of the mine, reduces the ability of the anchor node to receive radio signals from the portable positioning unit when the mobile object is located between the portable positioning unit and the anchor node; and a forwarding device, mounted on the mobile object, wherein the forwarding device is arranged to receive a first positioning signal from the portable positioning unit and send a second positioning signal to the anchor node based on the first positioning signal, wherein both the first positioning signal and the second positioning signal are indicative of the position of the portable positioning unit.

## Description

### TECHNICAL FIELD

The invention relates to improving position determination of portable positioning units in a mine.

### BACKGROUND

For reasons of safety it is sometimes desirable to provide mines, such as subterranean mines, with a monitoring system for monitoring any objects located in the mine. Examples of such objects are mining personnel and mining equipment. By knowing the location of the objects, decisions regarding e.g. the movement of equipment, blasting, or ventilation control may be taken with reduced risks with respect to the objects in the mine.

US2008137589 discloses a wireless mine tracking, monitoring, and rescue communications system. It describes a location information network for personnel and assets in underground mines. The network includes wireless access units and subnetwork controllers, active wireless locator/messenger tags, network controller(s), and enterprise servers running application control software. The wireless access units are installed in mine entries and crosscuts and tracks active wireless locator/messenger tags. The active tags may be worn by mine personnel or installed in mining equipment. The network subsystems form relay networks that wirelessly carry telemetry and control data without the need to penetrate the earth. The subsystems determine the location of persons and assets underground and monitor safety-related information, which can be used for disaster avoidance, early warning of impending disaster, and improved rescue effectiveness.

However, the radio conditions in mines are sometimes particularly difficult and any improvement in radio communication would be very useful.

### SUMMARY

It is an object to provide solutions where the ill-effects of the difficult radio conditions in mines are reduced.

According to a first aspect, it is presented a tracking system for determining a position of a portable positioning unit in a mine. The tracking system comprises: an anchor node comprising a receiver for receiving a signal from the portable positioning unit; a mobile object which, when present in a tunnel of the mine, reduces the ability of the anchor node to receive radio signals from the portable positioning unit when the mobile object is located between the portable positioning unit and the anchor node; and a forwarding device, mounted on the mobile object, wherein the forwarding device is arranged to receive a first positioning signal from the portable positioning unit and send a second positioning signal to the anchor node based on the first positioning signal, wherein both the first positioning signal and the second positioning signal are indicative of the position of the portable positioning unit. Using the forwarding device, the radio signal blocking effect of the mobile object is circumvented, allowing continued communication between the anchor node and the portable positioning unit.

The anchor node may comprise a unidirectional or a bidirectional antenna. Such a configuration may be particularly applicable for use in mines.

The forwarding device may be arranged to also send a third positioning signal to the anchor node, the third positioning signal being indicative of a position of the forwarding device. This allows positioning of the forwarding device and thereby the mobile object on which the forwarding device is mounted.

The second positioning signal may be a copy of the first positioning signal. This is an efficient way to forward the signal with low resource requirements.

The forwarding device may be arranged to send the second positioning signal and third positioning signal as part of a combined signal.

The forwarding device may also be arranged to receive an anchor node signal from the anchor node and send a forwarded anchor node signal to the portable positioning unit, the forwarded anchor node signal being based on the anchor node signal.

According to a second aspect, it is presented a method for enabling determination of a position of a portable positioning unit in a mine by an anchor node receiving a signal from the portable positioning unit, the method being executed in a forwarding device mounted on a mobile object which, when present in a tunnel of the mine, reduces the ability of the anchor node to receive radio signals from the portable positioning unit when the mobile object is located between the portable positioning unit and the anchor node. The method comprises the steps of: receiving a first positioning signal from the portable positioning unit, the first positioning signal being indicative of the position of the portable positioning unit; and sending a second positioning signal to the anchor node based on the first positioning signal, the second positioning signal also being indicative of the position of the portable positioning unit.

The method may further comprise the step of: sending a third positioning signal to the anchor node, the third positioning signal being indicative of a position of the forwarding device.

The method may further comprise the step of: generating the second positioning signal as a copy of the first positioning signal.

The steps of sending a second positioning signal and sending a third positioning signal may be combined in a step of sending a combined signal comprising the second positioning signal and the third positioning signal.

The method may further comprise the steps of: receiving an anchor node signal from the anchor node; and sending a forwarded anchor node signal to the portable positioning unit, the forwarded anchor node signal being based on the anchor node signal.

According to a third aspect, it is presented a computer program for enabling determination of a position of a portable positioning unit in a mine by an anchor node receiving a signal from the portable positioning unit. The computer program comprises computer program code which, when run on a forwarding device mounted on a mobile object which, when present in a tunnel of the mine, reduces the ability of the anchor node to receive radio signals from the portable positioning unit when the mobile object is located between the portable positioning unit and the anchor node, causes the forwarding device to: receive a first positioning signal from the portable positioning unit, the first positioning signal being indicative of the position of the portable positioning unit; and send a second positioning signal to the anchor node based on the first positioning signal, the second positioning signal also being indicative of the position of the portable positioning unit.

According to a fourth aspect, it is presented a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figs 1A-B are schematic diagrams showing a tracking system arranged in a mine;
Fig 2 is a sequence diagram illustrating communication between the portable positioning unit, the forwarding device and the anchor node of Fig 1B;
Fig 3 is a schematic diagram of a portable positioning unit of Figs 1A-B;
Fig 4 is a schematic diagram of an anchor node of Figs 1A-B;
Fig 5 is a schematic diagram of a forwarding device of Fig 1B;
Fig 6 is a flowchart describing an example of a method for enabling determination of a position of the portable positioning unit in the mine of Fig 1A-B; and
Fig 7 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

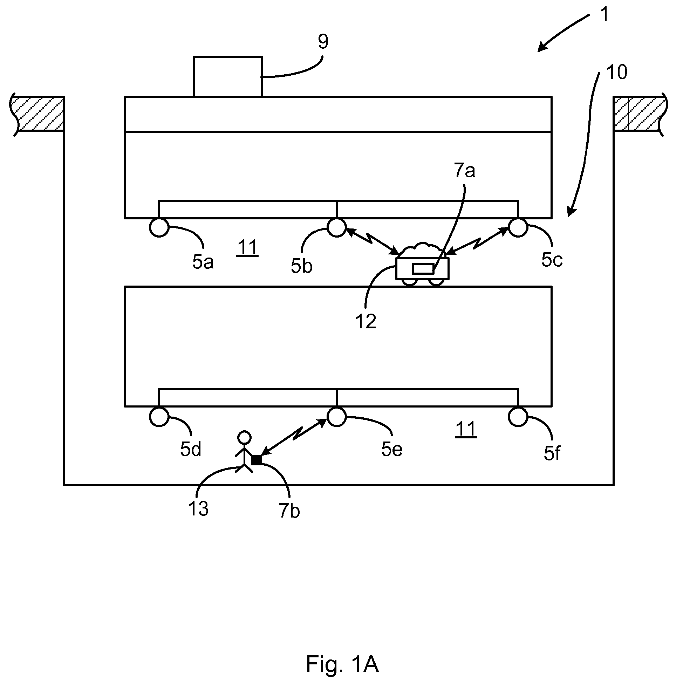

Fig 1A is a schematic diagram showing a tracking system 1 arranged in an underground mine 10 with one or more tunnels 11. The tracking system 1 comprises one or more portable positioning units 7a-b, a plurality of anchor nodes 5a-f, and a tracking unit 9. The tracking unit 9 comprises a processing unit (not shown) enabling communication with the anchor nodes 5a-f and thus one or more portable positioning units 7a-b, and optionally a display screen for presenting the location of the one or more portable positioning units in the mine 10.

The anchor nodes 5a-f are distributed at various positions of the mine 10 to enable communication between each one of portable positioning units 7a-b and an anchor node throughout the mine 10. In this example, a first portable positioning unit 7a is mounted on a cart 12, e.g. carrying ore, and a second portable positioning unit 7b is carried or attached to the clothing of a person 13.

The portable positioning units 7a-b located in the mine 10 communicate with one or more of the anchor nodes 5a-f in either or both directions. By communicating with nearby anchor nodes, the position of each portable positioning unit 7a-b can be determined.

For example, each one of the portable positioning units 7a-b is arranged to send signals to a nearby anchor node. In Fig 1A for instance, the first portable positioning unit 7a can communicate with at least one of the two nearby anchor nodes 5b and 5c and the second portable positioning unit 7b can communicate with at least one of the two nearby anchor nodes 5d and 5e.

By triangulation using several anchor nodes, by determining a signal strength of the signals received or by using time of flight from the portable positioning unit, the position of the portable positioning unit can be determined, and thus the position of a person 13 or object 12 carrying the portable positioning units 7a-b. Alternatively, the location data and thus the position of the of the portable positioning units 7a-b can be determined in each portable positioning unit 7a-b after having set up a communications link with a nearby anchor node 5a-e, and having received a signal from one of the anchor nodes 5a-e. In this case, the position of the portable positioning unit 7a-b is determined by similar methods as when the position is determined in one of the anchor nodes 5a-e. Alternatively, the determination of position of the portable positioning units 7a-b is performed in the tracking unit 9, or any other central node, based on signals received at one or more of the anchor nodes 5a-e.

In embodiments in which the location message is generated by the portable positioning units 7a-b, a location message is transmitted to an anchor node 5a-e with which the respective one of the portable positioning units 7a-b is able to communicate. Thus, in the example shown in Fig 1A, the portable positioning unit 7b is able to communicate with at least one of the anchor nodes 5d and 5e. The location message is hence transmitted to at least one of the anchor nodes 5d and 5e.

An anchor node 5a-e which receives a location message forwards the location data to the tracking unit 9.

It is to be noted the tracking system shown in Fig 1A is only an example, and the tracking system can comprise an arbitrary number of portable positioning units and anchor nodes.

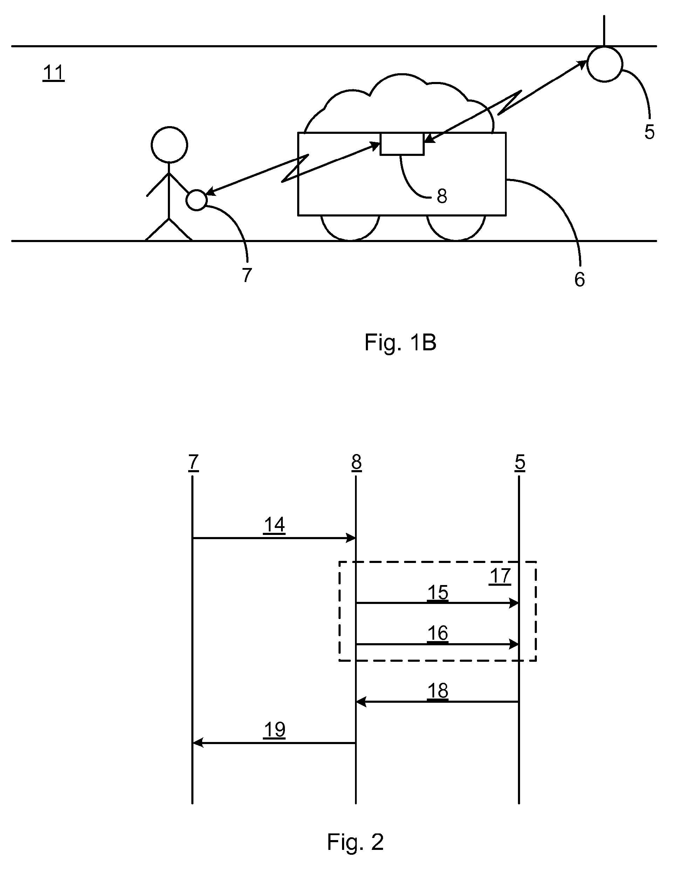

The situation described with reference to Fig 1A works well as long as radio signals can be transmitted freely between each one of the portable positioning units 7a-b and at least one of the anchor nodes 5a-e. However, Fig 1B illustrates a situation where there is a mobile object 6 in the tunnel 11. The mobile object 6 is located between the portable positioning unit 7 (one of the portable positioning units 7a-b of Fig 1A) and an anchor node 5 (one of the anchor nodes 5a-e). The mobile object 6 thus blocks at least part of the radio signals in either or both directions between the portable positioning unit 7 and the anchor node 5, which reduces the ability of the anchor node 5 to receive and/or send radio signals from the portable positioning unit 7. The mobile object 6 is in this example a cart with ore, but the mobile object can be any object which at least partially blocks radio communication between the anchor nodes 5 and the portable positioning unit 7.

In order to allow position determination of the portable positioning unit 7, a forwarding device 8 is mounted, attached or carried by the mobile object 6. The forwarding device 8 is arranged to act as an intermediary between a portable positioning unit and an anchor device.

Using the forwarding device, radio communication between the portable positioning device 7 and the anchor node 5 can be maintained even when there is an object 6 which would otherwise block any radio signals between the portable positioning device 7 and the anchor node.

Referring to Fig 2, Fig 2 is a sequence diagram illustrating communication between the portable positioning unit 7, the forwarding device 8 and the anchor node 5 of Fig 1B.

In the example of Fig 2, the portable positioning unit 7 sends a first positioning signal 14 to the forwarding device 8. The forwarding device 8 reacts on this and, based on the first positioning signal 14, generates and sends a second positioning signal 15 to the anchor node 5. Both the first positioning signal 14 and the second positioning signal 15 are indicative of the position of the portable positioning unit 7.

Optionally, the forwarding device 8 also sends a third positioning signal 16 to the anchor node 5. The third positioning signal 16 is indicative of a position of the forwarding device 8 itself. In the example of Fig 1B, this would mean that the anchor node has received signals which allow the anchor node to work out the position of both the portable positioning unit 7 and the forwarding device 8. The second positioning signal 15 and the third positioning signal 16 can optionally be combined in a combined positioning signal 17.

The forwarding device 8 can also be configured to relay communication in the other direction. In other words, when the anchor node 5 sends an anchor node signal 18 intended for the portable positioning device 7, the forwarding device 8 can receive the anchor node signal 18 and send a forwarded anchor node signal 19 to the portable positioning unit 7.

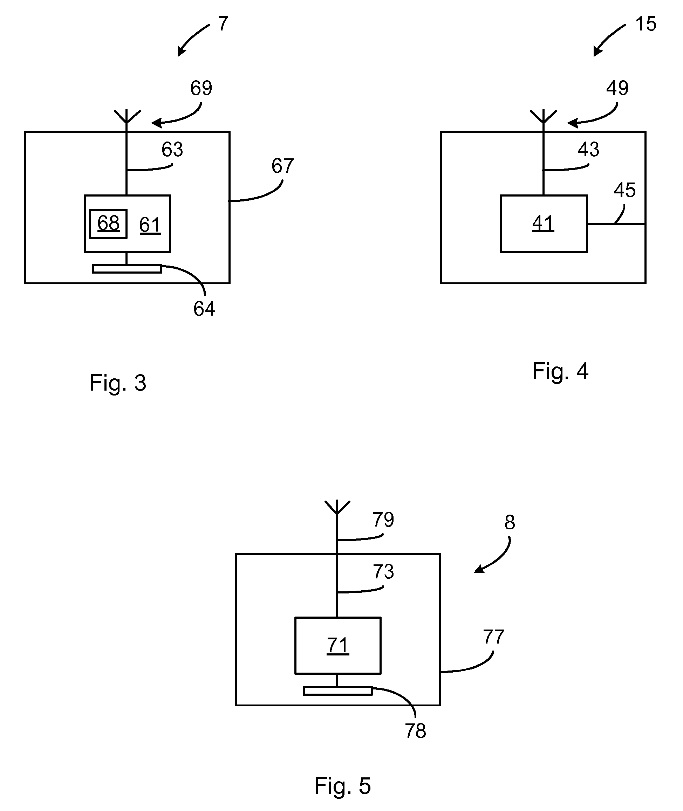

Fig 3 is a schematic diagram of a portable positioning unit of Figs 1A-B. The portable positioning unit 7 comprises a housing 67, an antenna 69, a processor 61 and a memory 68, a battery 64 for powering the portable positioning unit 7, and an electrical connection 63 between the processor 61 and the antenna unit 64.

Fig 4 is a schematic diagram of an anchor node 5 of Figs 1A-B. The anchor node 5 comprises a cover 47, an antenna 49, a processor 41, an electrical connection 43 between the processor 41 and the antenna unit 49, and an output 45 via which the processor 41 can output data, such as location messages to the tracking unit 9. Depending on the mounting position of the anchor node, the antenna 49 is in most cases unidirectional or bidirectional. If the anchor node 5 is mounted in a wide open space of the mine, however, the antenna 49 can be omnidirectional.

Fig 5 is a schematic diagram of a forwarding device 8 of Fig 1B. The forwarding device 8 comprises a cover 77, an antenna 79, a processor 71, a memory 78, an electrical connection 73 between the processor 71 and the antenna unit 79.

The memory 78 may comprise software, i.e. computer program, which when executed by the forwarding device 8 performs the methods presented herein.

The portable positioning unit 7 and the anchor node 5 are adapted to communicate via their respective antennas 69 and 49 either directly, or via the forwarding device 8 as an intermediary, as explained above and below.

The portable positioning unit 7 may be any kind of mobile communication device able to perform the functions presented herein to allow the position of the portable positioning unit 7 to be determined.

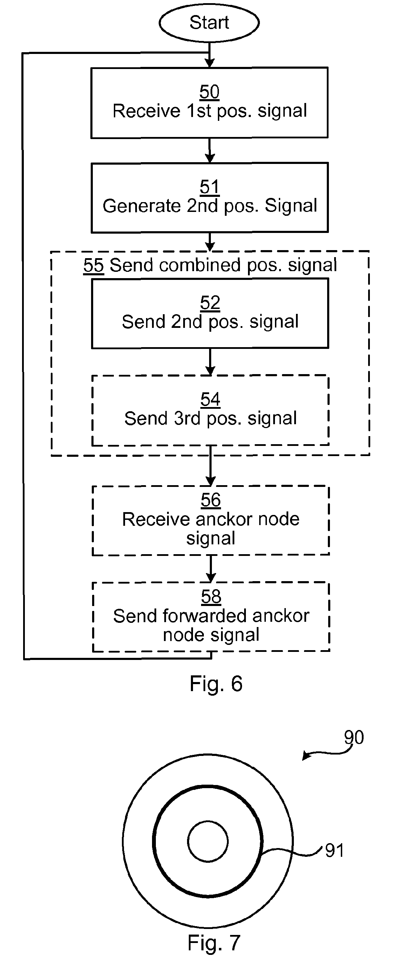

Fig 6 is a flowchart describing an example of a method for enabling determination of a position of the portable positioning unit in the mine of Figs 1A-B. It is mainly the situation of Fig 1B where the method is applicable. The method is executed in the forwarding device 8.

In a receive first positioning signal 50, the forwarding device 8 receives a first positioning signal the portable positioning unit. The first positioning signal is indicative of the position of the portable positioning unit

In an optional generate second positioning signal step 51, the second positioning signal is generated based on the first positioning signal. For example, the second positioning signal can be a copy of the first positioning signal.

In a send second positioning signal 52, the second positioning signal is sent to the anchor node, where the second positioning signal is based on the first positioning signal. The second positioning signal is also indicative of the position of the portable positioning unit.

In an optional send third positioning signal step 54, a third positioning signal is sent to the anchor node. The third positioning signal is indicative of a position of the forwarding device itself.

Optionally, the steps 52, 54 of sending the second positioning signal and sending the third positioning signal, are combined in a send combined positioning signal step 55. In that case, a combined signal is sent which comprising the second positioning signal and the third positioning signal.

Optionally, in a receive anchor node signal step 56, an anchor node signal intended for the portable positioning unit is received from the anchor node. If this step is executed, the method also comprises a send forwarded anchor node signal step 58, where a forwarded anchor node signal is sent to the portable positioning unit. The forwarded anchor node signal is based on the anchor node signal. For example, the forwarded anchor node signal can be a copy of the anchor node signal.

The method is repeated to iteratively forward signals between the portable positioning device and the anchor node.

It is to be noted that the forwarding from the portable positioning unit to the anchor node can be executed independently, in the forwarding device, from the forwarding from the anchor node to the portable positioning unit.

Fig 7 shows one example of a computer program product 90 comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied as a memory of a device, such as the forwarding device 8. While the computer program 91 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A tracking system (1) for determining a position of a portable positioning unit (7) in a mine (10), the tracking system (1) comprising:
an anchor node (5) comprising a receiver for receiving a signal from the portable positioning unit (7);
a mobile object (6) which, when present in a tunnel (11) of the mine (10), reduces the ability of the anchor node (5) to receive radio signals from the portable positioning unit (7) when the mobile object (6) is located between the portable positioning unit (7) and the anchor node (5); and
a forwarding device (8), mounted on the mobile object (6), wherein the forwarding device (8) is arranged to receive a first positioning signal (14) from the portable positioning unit (7) and send a second positioning signal (15) to the anchor node (5) based on the first positioning signal (14), wherein both the first positioning signal (14) and the second positioning signal (15) are indicative of the position of the portable positioning unit (7).

2. The tracking system (1) according to claim 1, wherein the anchor node (5) comprises a unidirectional or a bidirectional antenna (49).

3. The tracking system (1) according to claim 1 or 2, wherein the forwarding device (8) is arranged to also send a third positioning signal (16) to the anchor node (5), the third positioning signal (16) being indicative of a position of the forwarding device (8).

4. The tracking system (1) according to any one of the preceding claims, wherein the second positioning signal (15) is a copy of the first positioning signal (14).

5. The tracking system (1) according to claim 3 or 4, wherein the forwarding device (8) is arranged to send the second positioning signal (15) and third positioning signal (16) as part of a combined signal (17).

6. The tracking system (1) according to any one of the preceding claims, wherein the forwarding device (8) is also arranged to receive an anchor node signal (18) from the anchor node (5) and send a forwarded anchor node signal (19) to the portable positioning unit (7), the< forwarded anchor node signal (19) being based on the anchor node signal (18).

7. A method for enabling determination of a position of a portable positioning unit (7) in a mine (10) by an anchor node receiving a signal from the portable positioning unit (7), the method being executed in a forwarding device mounted on a mobile object (6) which, when present in a tunnel (11) of the mine (10), reduces the ability of the anchor node (5) to receive radio signals from the portable positioning unit (7) when the mobile object (6) is located between the portable positioning unit (7) and the anchor node (5), the method comprising the steps of:
receiving (50) a first positioning signal (14) from the portable positioning unit (7), the first positioning signal (14) being indicative of the position of the portable positioning unit (7); and
sending (52) a second positioning signal (15) to the anchor node (5) based on the first positioning signal (14), the second positioning signal (15) also being indicative of the position of the portable positioning unit (7).

8. The method according to claim 7, further comprising the step of:
sending (54) a third positioning signal (16) to the anchor node (5), the third positioning signal (16) being indicative of a position of the forwarding device (8).

9. The method according to claim 7 or 8, further comprising the step of:
generating (51) the second positioning (15) signal as a copy of the first positioning signal (14).

10. The method according to any one of claims 8 or 9, wherein the steps (52, 54) of sending a second positioning signal (15) and sending a third positioning signal (16) are combined in a step (55) of sending a combined signal (17) comprising the second positioning signal (15) and the third positioning signal (16).

11. The method according to any one of claims 7 to 10, further comprising the steps of:
receiving (56) an anchor node signal (18) from the anchor node (5); and
sending (58) a forwarded anchor node signal (19) to the portable positioning unit (7), the forwarded anchor node signal (19) being based on the anchor node signal (18).

12. A computer program (91) for enabling determination of a position of a portable positioning unit (7) in a mine (10) by an anchor node receiving a signal from the portable positioning unit (7), the computer program comprising computer program code which, when run on a forwarding device mounted on a mobile object (6) which, when present in a tunnel (11) of the mine (10), reduces the ability of the anchor node (5) to receive radio signals from the portable positioning unit (7) when the mobile object (6) is located between the portable positioning unit (7) and the anchor node (5), causes the forwarding device to:
receive a first positioning signal (14) from the portable positioning unit (7), the first positioning signal (14) being indicative of the position of the portable positioning unit (7); and
send a second positioning signal (15) to the anchor node (5) based on the first positioning signal (14), the second positioning signal (15) also being indicative of the position of the portable positioning unit (7).

13. A computer program product (90) comprising a computer program according to claim 12 and a computer readable means on which the computer program is stored.
